# EUROPEAN PATENT SPECIFICATION

(11) **EP 3 339 003 B1**
(45) Date of publication and mention of the grant of the patent: **29.01.2020**
(21) Application number: 17205236.7
(22) Date of filing: 04.12.2017
(51) Int. Cl.: B29C 65/00, B65B 51/30, B65D 75/50, B65B 9/12, B65B 9/20, B31B 70/00

(54) **A METHOD FOR PROVIDING TRANSVERSAL SEALS TO A TUBE OF PACKAGING MATERIAL, AND A SEALING JAW ASSEMBLY**
VERFAHREN ZUR BEREITSTELLUNG TRANSVERSALER DICHTUNGEN AN EINEM ROHR AUS VERPACKUNGSMATERIAL UND DICHTUNGSBACKENANORDNUNG
PROCÉDÉ PERMETTANT DE FOURNIR DES JOINTURES TRANSVERSALES À UN TUBE DE MATÉRIAU D'EMBALLAGE ET UN ENSEMBLE À MÂCHOIRES DE SCELLAGE

(30) Priority: 21.12.2016 EP 16205595
(43) Date of publication of application: 27.06.2018
(73) Proprietor: Tetra Laval Holdings & Finance S.A., 1009 Pully (CH)
(72) Inventor: Håkansson, Paul, 247 51 Dalby (SE)
(74) Representative: Tetra Pak - Patent Attorneys SE

(56) References cited:
- WO-A1-2014/154623
- WO-A1-2015/019300
- CH-A- 248 124
- JP-A- H04 142 231
- SE-B- 346 284

## Description

### Technical Field

The present invention relates to a method of providing transversal seals to a tube of packaging material, as well as a sealing jaw assembly capable of providing such transversal seals. In particular, the present invention relates to providing transversal seals in order to form irregular tetrahedral packages.

### Background

Irregular tetrahedral packages have been suggested by the present applicant e.g. in WO2014/154623. In short, the irregular tetrahedral packages are produced from a tube of packaging material, preferably being configured to enclose a liquid food product. The tube is formed by reforming a flat web of packaging material to a cylindrical tube, filling the tube with a product, and transversally sealing and cutting the tube, at regular intervals, into separate packages.

For this type of packages, and as is described in the above-mentioned prior art reference, the transversal seals are provided by two separate pairs of sealing jaws. These pairs of sealing jaws are operating relative to each other such that each pair will clamp the tube in a respective plane during sealing. The sealing jaws of a plane may thus operate, i.e. perform sealing, in a plane being perpendicular to the longitudinal axis of the tube. As the tube normally extends vertically, the sealing plane is thus coinciding with a horizontal plane. An example of such pairs of sealing jaws is disclosed in JP-A-H04142231.

These pairs of jaws can also be tilted slightly such that the transversal seals are provided at an angle relative the horizontal plane. The purpose of having the sealing jaw pairs angled relative the horizontal plane is to produce two types of irregular tetrahedral packages in an alternating manner, where one package is a mirror image of its immediately upstream and downstream package. By combining six packages, three of each type, it has been proven possible to arrange all six packages in the shape of a rectangular box, i.e. a six-face shape of which all faces are a rectangle, and of which each pair of adjacent faces meets at a right angle.

As is evident, these types of packages may be stored and transported extremely efficient as the packages fill almost the entire space within the rectangular box.

Although irregular tetrahedral packages can be arranged into a cube for improved storing and transport, once filled the shape of the packages may be slightly distorted. This means that perfect fit into a rectangular box may be difficult to achieve, and there is thus a need for further improving these kinds of packages.

### Summary

An object of the invention is to provide a sealing jaw assembly and a method for providing transversal seals to a tube of packaging material overcoming the above mentioned drawbacks of prior art systems and methods.

According to a first aspect a sealing jaw assembly for providing transversal seals to a tube of packaging material is provided as claimed in claim 1.

According to a second aspect, a method for providing transversal seals to a tube of packaging material is provided as claimed in claim 7.

### Brief Description of the Drawings

Examples of the teachings herein will be described in further detail in the following with reference to the accompanying drawings which illustrate nonlimiting examples on how the examples can be reduced into practice and in which:
Fig. 1 is an isometric view of irregular tetrahedral packages according to an example;
Fig. 2 is an isometric view of a tube of packaging material during production of individual irregular tetrahedral packages;
Fig. 3 is an isometric view of a sequence of irregular tetrahedral packages;
Fig. 4 is a top view of a sealing jaw assembly according to an example;
Fig. 5 is an isometric view of a package according to an example;
Fig. 6 is a cross-sectional view of a package according to an example; and
Fig. 7 is a schematic view of a method according to an example.

### Detailed Description

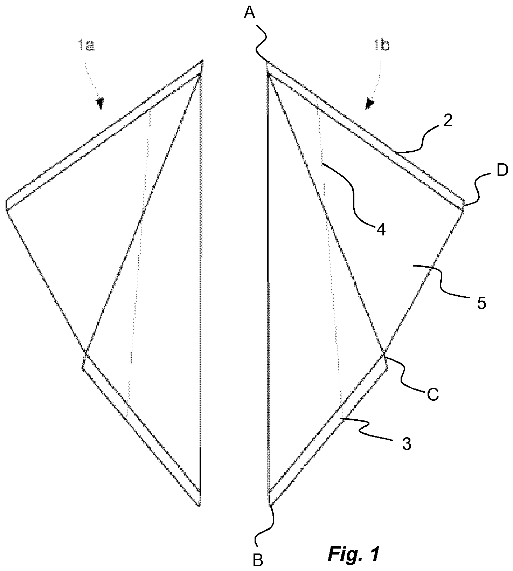

The present invention relates to a new method and sealing jaw assembly for manufacturing irregular tetrahedral packages. An example of packages 1a, 1b for liquid food is shown schematically in Fig. 1. These are idealized packages that has flat side panels and distinct edges, but it should be understood that an actual package may deviate slightly from this ideal shape when manufactured in an actual machine. The side panels may be bulging outwardly slightly, and the edges may be slightly rounded.

In Fig. 1, the shown packages 1a-b are made from a flat web of laminated packaging material, typically comprising a carton-based core, for giving certain stiffness to the package, and inner and outer polymer layers. The inner polymer layer makes the package liquid-tight and protects the carton-based core layer, and it further allows heat-sealing of the package into its final shape. The outer layer protects the carton-based core layer from the moisture coming from the environment.

In some cases, an aluminum layer can also be provided in the laminated packaging material, normally on the inside of the carton-based core layer, to protect the food product from oxygen and/or light. The aluminum layer is typically covered with an inner most polymer layer.

The package 1a, 1b has four corners A, B, C and D that define the inner space of the package 1a-b, in which the content of the package 1 will be enclosed. The package has four lateral edges, being labeled using the corners, i.e. ab, ac, bd, cd, and two end edges, ad and bc. Two end fins, 2 and 3, project from said end edges. These end fins 2, 3 form transversal ends of the package 1. The package 1 has four side panels, labeled by the corners that define them, i.e. ABC, ACD, ABD and BCD.

Each package 1a, 1b is shaped like an irregular tetrahedron. Each lateral panel ABC, ACD, ABD and BCD is a right-angle triangle. Furthermore, two of the panels, ABC and ABD, are right-angled isosceles triangles having the same size, and having one edge ab in common. The other two panels, ACD and BCD, also have the same size and they share the hypotenuse, cd.

As is shown in Fig. 1, each package 1a-b is shown having a longitudinal sealing 4 extending from the first transversal end 2 to the second transversal end 3. The longitudinal sealing 4 is made during the forming of a flat web of packaging material into a tube, before the package is filled with product and is divided into individual packages, in a way that is common in form-fill-seal machines, or in aseptic filling machines of the kind manufactured by the applicant, such as Tetra Pak® A3/Flex or Tetra Pak® A1.

Each package 1 thus has a body 5 having a tetrahedral shape formed by transversally sealing two ends 2, 3, of a tube of packaging material.

The packages 1a-b, being defined as above, are preferably continuously formed as two different types in an alternating manner, one type being the mirror image of the second type. In Fig. 1, a first package 1a is shown to the left, and a second package 1b is shown to the right, having a mirrored shape to the first package 1a. It is possible to combine three packages, two first packages 1a and one second package 1b, into a triangular prism. Two such triangular prisms can be combined into a rectangular box. The rectangular box can be formed in two ways: 1) by combining two groups of 1a-1b-1a prisms, or 2) by combining a group of 1a-1b-1a prism with a group of 1b-1a-1b prism. In the second case, the same amount of first type 1a and second type 1b packages are used.

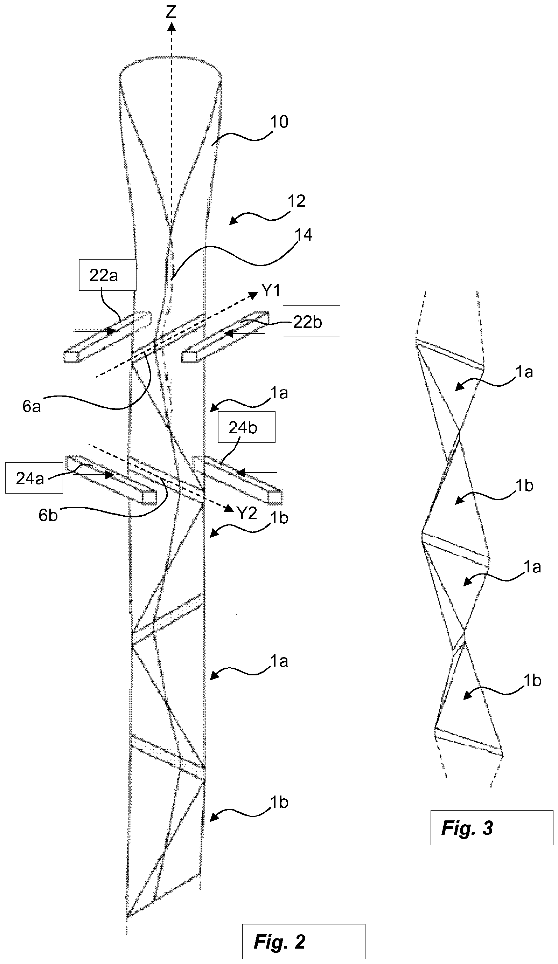

Now, the manufacturing the packages of the invention will be described. In Fig. 2, a part of a web 10 of packaging material is provided, being of the laminated type as described above. The flat web 10 of packaging material is brought through a forming section, not shown, in which the web 10 is formed into a cylindrical tube 12 of packaging material. An overlap area 14, forming a longitudinal seal, is provided during the tube forming. The overlapping edges are sealed together in a way known per se, typically by heating the edges and then pressing them together. The overlap area 14 may be provided with a plastic strip, not shown, which is sealed to the inside surface of the overlap area 14, and which strip protrudes from one lateral edge of the web 10 of packaging material. This strip serves to cover the inner carton edge of the packaging material, in a way known per se, which edge may otherwise absorb the liquid food product inside the package 1a, 1b.

In Fig. 2, the arrangement shown provides first packages 1a and second packages 1b in an alternating manner from a single tube 12 of packaging material. For this, a sealing jaw arrangement 20 is required. The sealing jaw arrangement 20 comprises at least a first pair of opposing sealing jaws 22a, 22b being movable relative to each other to provide a first transversal seal 6a to the tube 12, anda second pair of opposing sealing jaws 24a, 24b being moveable relative to each other to provide a second transversal seal 6b to the tube 12. The first transversal seal 6a is provided such that it forms the upper transversal end 2 of one package 1b, and a bottom transversal end 3 of its adjacent package 1a (see Fig. 1), while the second transversal seal 6b is provided such that it forms the bottom transversal end 2 of one package 1a, and an upper transversal end 2 of its adjacent package 1b.

The sealing jaws 22a-b, 24a-b will be operated such that they meet, during sealing, at an angle being about 22.5° in relation to a plane being perpendicular to the longitudinal axis of the tube 12 of packaging material. If the longitudinal extension Z of the tube 12 is arranged in the vertical direction, the sealing jaws 22a-b, 24a-b are tilted relative the horizontal plane when they meet during sealing.

The pairs of sealing jaws 22a-b, 24a-b are mounted for reciprocal motion toward and away from one another, as is indicated with arrows on each jaw 22a-b, 24a-b. The jaws of a common pair when moved toward each other act to compress and flatten the tube 12 of packaging material so as to adhere opposed interior surfaces of the packaging material together. When activated, the jaws of a common pair of sealing jaws achieve a seal of the tubular material along a seam line or sealing axis which intersects the longitudinal axis Z of the tube 12.

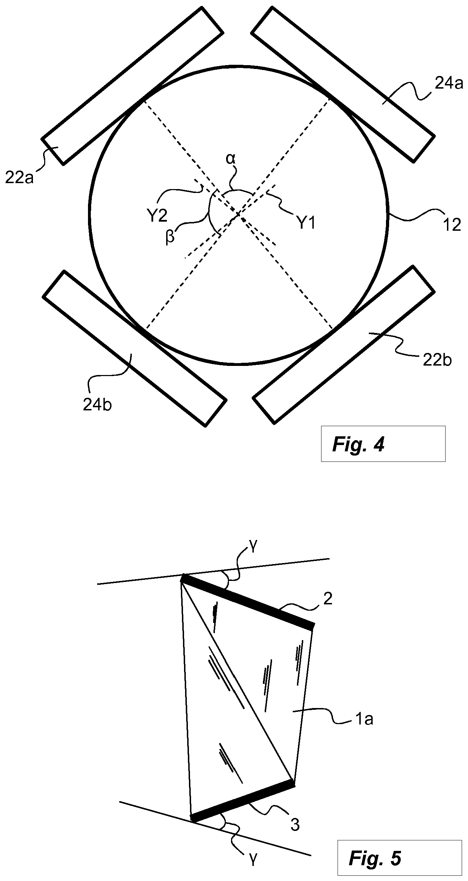

Adjacent pairs of jaws 22a-b, 24a-b are so oriented that they meet and make a seal in transversal directions which are angled relative one another, i.e. the direction indicated by reference numeral Y1 is angled relative to the direction indicated by reference numeral Y2. Especially, and as will further be explained with respect to Fig. 4, the sealing jaws 22a-b of the first pair are not perpendicular to the sealing jaws 24a-b of the second pair. It should be noted that the angle between the transversal directions Y1, Y2 are measured in a plane being perpendicular to the longitudinal axis Z of the tube 12.

In order to achieve the unique irregularity of the tetrahedral shape of the packages 1a, 1b, each pair of jaws 22a-b, 24a-b is configured to be moveable such that the jaws 22a, 22b of the first pair move towards and away from each other, and the jaws 24a, 24b of the second pair move towards and away from each other. When the jaws 22a-b, 24a-b meet with each other in order to provide the seal, they are oriented to lie in a plane which has a predetermined angular relationship to the length direction of the tube 12 of packaging material, so that the longitudinal axis Y1, Y2 of the transversal sealings 6a, 6b achieved by each pair of jaws has the same predetermined angular relationship to the longitudinal axis Z of the tube of packaging material. Each sealing jaw 22a-b, 24a-b is for this purpose, when arranged in their respective operative position for providing the sealing 6a, 6b, angled approximately 22.5° relative a plane being perpendicular to the longitudinal axis Z of the tube 12. This will lead to transversal sealings 6a, 6b that will have a longitudinal axis Y1, Y2 that is angled approximately 22.5° in relation to a plane that is orthogonal to the longitudinal axis Z of the tube 12 of packaging material.

The pairs of jaws 22a-b, 24a-b may be spaced apart longitudinally from another, measured along the longitudinal axis Z of the tube 12 of packaging material, as indicated in Fig. 2. However, the first and second pair of sealing jaws 22a-b, 24a-b may also be arranged at the same position along the longitudinal extension of the tube 12, whereby activation of the respective pair is controlled in a manner such that when the tube 12 is fed forward (or downward in Fig. 2), the sealings 6a, 6b will be provided at regular intervals.

Fig. 3 shows a series of packages 1a-b manufactured in an alternating manner in accordance with the description herein.

Fig. 4 is a schematic representation of a jaw system, where the first and second pair of sealing jaws 22a-b, 24a-b are arranged to provide transversal seals to a tube 12, e.g. by having all jaws 22a-b, 24a-b arranged at the same longitudinal position of the tube 12.

This jaw system can thus be realized by using two pairs of chain assemblies, on which many jaws can be mounted. This is the typical setup that is used for the filling machines that manufacture Tetra Classic® packages. The jaw system can also be realized by having only two pairs of jaws which are driven by some drive means, similar to what is used in the Tetra Pak A3/Flex filling machine or TBA/19 filling machine.

It will of course be understood that each pair of jaws 22a-b, 24a-b in making a transversal seal 6a, 6b across the tube 12 of packaging material is making, in the same operation, the top transversal end for one of the individual packages 1a, 1b and the bottom transversal end for another of the individual packages 1b, 1a, the tube 12 of packaging material being subsequently cut along approximately the median line of each transversal seal 6a, 6b by any suitable means, not shown, to separate the strip material into individual packages 1a, 1b.

In Fig. 2, it may appear that the tube 12 of packaging material is stationary and the jaws 22a-b, 24a-b make the transversal sealings 6a, 6b at different positions. This is not the case in normal production, however, where each sealing jaw 22a-b, 24a-b makes contact with the tube 12 of packaging material at an almost constant position (position along the longitudinal axis Z), and the tube 12 is then pulled down allowing for a new sealing jaw to again make a transversal seal at the same position along the longitudinal axis Z as the previous jaw. This pulling action of the sealing jaws 22a-b, 24a-b on the tube 12 is what feeds the web 10 of packaging material through the machine. Sometimes, additional feeding rollers are provided further upstream in the filling machine, in order to reduce the tension in the web 10.

Now returning to Fig. 4 each sealing jaw 22a-b, 24a-b has an extension in the sealing direction, i.e. the directions Y1, Y2 indicated in Fig. 2. The two sealing jaws 22a-b, 24a-b of a common pair face each other, i.e. they are arranged opposed to each other. The normal of each sealing jaw 22a-b, 24a-b is thus perpendicular to its associated sealing direction Y1, Y2.

The angular distance between a first jaw 22a of the first pair of jaws and a first jaw 24a of the second pair of jaws, in Fig. 4 indicated by reference α, is between 75-80°, preferably 78,5°. The angular distance between the first jaw 22a of the first pair of jaws and a second jaw 24b of the second pair of jaws, in Fig. 4 indicated by reference β, is between 100-105°, preferably 101,5°, whereby the angular distances are measured in a plane being perpendicular to the longitudinal axis of the tube. The angular distance is thus measured between the normal of the respective sealing jaw 22a-b, 24a-b as indicated in Fig. 4. It should be noted that the angular distances mentioned above are preferably measured when the jaws 22a-b, 24a-b are arranged in their sealing position, i.e. when two jaws of a common pair meet with each other.

In Fig. 5 an example of a package 1a is shown for further explaining the orientation of the transversal ends 2, 3 as provided by the sealing jaw assembly shown in Fig. 4. The sealing jaws 22a-b, 24a-b are as explained earlier angled relative to each other such that a projection of the transversal end 2 into a plane being perpendicular to the longitudinal axis Z of the tube 12 is not perpendicular to a projection of the bottom transversal ends 3 in the same plane. Further, the sealing jaws 22a-b, 24a-b are tilted relative a plane being perpendicular to the longitudinal axis Z of tube 12 such that the transversal ends 2, 3 extend in a direction not being perpendicular to the longitudinal extension Z of the tube 12. As can be seen in Fig. 5 the transversal ends 2, 3 are tilted relative a plane being perpendicular to the longitudinal direction Z of the tube 12 by an angle γ. Preferably, the tilt angle γ is between 15-30°, preferably between 20-25°.

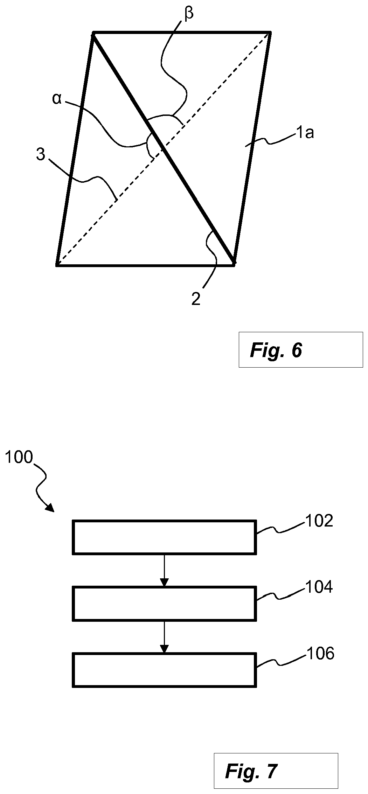

In Fig. 6 an example of a package 1a is shown in cross-section. The transversal ends 2, 3 are non-perpendicular to each other, as indicated by the angles α, β. Hence, the first transversal end 2 and the second transversal end 3 are arranged in parallel planes, and a projection of the second transversal end 3 into the plane of the first transversal end 2 intersects the first transversal end 2 by an angle α being between 75 - 80°.

In Fig. 7 a method 100 for providing transversal seals to a tube of packaging material is schematically shown. The method comprises a first step 102 of providing a first pair of opposing sealing jaws being movable relative to each other, and a second step 104 of providing a second pair of opposing sealing jaws being moveable relative to each other. Steps 102, 104 are performed such that the angular distance between a first jaw of the first pair of jaws and a first jaw of the second pair of jaws between 75 - 80°, and the angular distance between the first jaw of the first pair of jaws and a second jaw of the second pair of jaws is between 100 - 105°. The method 100 also comprises a third step 106 of activating said first and second pairs of sealing jaws such that the tube of packaging material is provided with transversal seals.

The invention has mainly been described with reference to a few examples. However, as is readily understood by a person skilled in the art, other examples than the ones disclosed above are equally possible within the scope of the invention, as defined by the appended claims.

## Claims

1. A sealing jaw assembly for providing transversal seals to a tube (12) of packaging material, said sealing jaw assembly comprising
a first pair of opposing sealing jaws (22a, 22b) being movable relative to each other to provide a first transversal seal (6a) to the tube (12), and
a second pair of opposing sealing jaws (24a, 24b) being moveable relative to each other to provide a second transversal seal (6b) to the tube (12),
**characterized in that** an angular distance (α) between a first jaw (22a) of the first pair of jaws (22a, 22b) and a first jaw (24a) of the second pair of jaws (24a, 24b) is between 75-80°, and an angular distance (β) between the first jaw (22a) of the first pair of jaws (22a, 22b) and a second jaw (24b) of the second pair of jaws (24a, 24b) is between 100-105°, whereby the angular distances are measured in a plane being perpendicular to the longitudinal axis of the tube.

2. The sealing jaw assembly according to claim 1 , wherein the sealing jaws of the first (22a, 22b) and second (24a, 24b) pair of sealing jaws are arranged to move relative to each other such that the sealing jaws of the first pair of sealing jaws (22a, 22b) meet in a first sealing plane during sealing, and the sealing jaws of the second pair of sealing jaws (24a, 24b) meet in a second sealing plane during sealing.

3. The sealing jaw assembly according to claim 2, wherein the sealing planes in which the sealing jaws of the first (22a, 22b) and second (24a, 24b) pair of sealing jaws meet during sealing is tilted at a tilt angle (γ), relative a plane being perpendicular to a longitudinal axis (Z) of the tube (12).

4. The sealing jaw assembly according to claim 3, wherein the tilt angle (γ) is between 15-30°.

5. The sealing jaw assembly according to any one of the preceding claims, wherein said pairs of sealing jaws (22a, 22b, 24a, 24b) are configured to provide induction heating of the packaging material.

6. The sealing jaw assembly according to any one of the preceding claims, wherein said pairs of sealing jaws (22a, 22b, 24a, 24b) are configured to operate synchronous or asynchronous relative to each pair of jaws.

7. A method for providing transversal seals (6a, 6b) to a tube (12) of packaging material, comprising
providing a first pair of opposing sealing jaws (22a, 22b) being movable relative to each other, and
providing a second pair of opposing sealing jaws (24a, 24b) being moveable relative to each other,
**characterized in that** an angular distance (α) between a first jaw (22a) of the first pair of jaws (22a, 22b) and a first jaw (24a) of the second pair of jaws (24a, 24b) is between 75-80°, and an angular distance (β) between the first jaw (22a) of the first pair of jaws (22a, 22b) and a second jaw (24b) of the second pair of jaws (24a, 24b) is between 100-105°, whereby the angular distances are measured in a plane being perpendicular to the longitudinal axis of the tube, and activating said first (22a, 22b) and second (24a, 24b) pairs of sealing jaws for transversely sealing the tube (12).

8. The method according to claim 7, wherein the sealing jaws of the first (22a, 22b) and second (24a, 24b) pair of sealing jaws moves relative to each other such that the sealing jaws of the first pair of sealing jaws (22a, 22b) meet in a first sealing plane during sealing, and the sealing jaws of the second pair of sealing jaws (24a, 24b) meet in a second sealing plane during sealing.

9. The method according to claims 7 or 8, wherein said pairs of sealing jaws (22a, 22b, 24a, 24b) seal the packaging material by induction heating.

10. The method according to any one of claims 7-9, wherein said pairs of sealing jaws (22a, 22b, 24a, 24b) move synchronous or asynchronous relative to each pair of jaws.

## Patentansprüche

1. Versiegelungsbackenanordnung zum Anbringen von quer verlaufenden Versiegelungen an einer Röhre (12) Verpackungsmaterial, wobei die Versiegelungsbackenanordnung Folgendes umfasst:
ein erstes Paar von sich gegenüberliegenden Versiegelungsbacken (22a, 22b), die relativ zueinander bewegbar sind, um eine erste quer verlaufende Versiegelung (6a) an der Röhre (12) anzubringen, und
ein zweites Paar von sich gegenüberliegenden Versiegelungsbacken (24a, 24b), die relativ zueinander bewegbar sind, um eine zweite quer verlaufende Versiegelung (6b) an der Röhre (12) anzubringen,
**dadurch gekennzeichnet, dass** ein Winkelabstand (α) zwischen einer ersten Backe (22a) des ersten Paars von Backen (22a, 22b) und einer ersten Backe (24a) des zweiten Paars von Backen (24a, 24b) zwischen 75 und 80° liegt und ein Winkelabstand (β) zwischen der ersten Backe (22a) des ersten Paars von Backen (22a, 22b) und einer zweiten Backe (24b) des zweiten Paars von Backen (24a, 24b) zwischen 100 und 105° liegt, wodurch die Winkelabstände in einer Ebene gemessen werden, die rechtwinklig zu der Längsachse der Röhre verläuft.

2. Versiegelungsbackenanordnung nach Anspruch 1, wobei die Versiegelungsbacken des ersten (22a, 22b) und des zweiten (24a, 24b) Paars von Versiegelungsbacken so angeordnet sind, dass sie sich auf eine solche Weise relativ zueinander bewegen, dass die Versiegelungsbacken des ersten Paars von Versiegelungsbacken (22a, 22b) beim Versiegeln in einer ersten Versiegelungsebene aufeinandertreffen und die Versiegelungsbacken des zweiten Paars von Versiegelungsbacken (24a, 24b) beim Versiegeln in einer zweiten Versiegelungsebene aufeinandertreffen.

3. Versiegelungsbackenanordnung nach Anspruch 2, wobei die Versiegelungsebenen, in der die Versiegelungsbacken des ersten (22a, 22b) und des zweiten (24a, 24b) Paars von Versiegelungsbacken beim Versiegeln aufeinandertreffen, um einen Neigungswinkel (γ) relativ zu einer Ebene, die rechtwinklig zu einer Längsachse (Z) der Röhre (12) verläuft, geneigt sind.

4. Versiegelungsbackenanordnung nach Anspruch 3, wobei der Neigungswinkel (γ) zwischen 15 und 30° ist.

5. Versiegelungsbackenanordnung nach einem der vorhergehenden Ansprüche, wobei die Paare von Versiegelungsbacken (22a, 22b, 24a, 24b) dazu ausgelegt sind, eine Induktionserwärmung des Verpackungsmaterials bereitzustellen.

6. Versiegelungsbackenanordnung nach einem der vorhergehenden Ansprüche, wobei die Paare von Versiegelungsbacken (22a, 22b, 24a, 24b) dazu ausgelegt sind, relativ zu jedem Paar von Backen synchron oder asynchron zu arbeiten.

7. Verfahren zum Anbringen von quer verlaufenden Versiegelungen (6a, 6b) an einer Röhre (12) Verpackungsmaterial, umfassend:
Bereitstellen eines ersten Paars von sich gegenüberliegenden Versiegelungsbacken (22a, 22b), die relativ zueinander bewegbar sind, und
Bereitstellen eines zweiten Paars von sich gegenüberliegenden Versiegelungsbacken (24a, 24b), die relativ zueinander bewegbar sind,
**dadurch gekennzeichnet, dass** ein Winkelabstand (α) zwischen einer ersten Backe (22a) des ersten Paars von Backen (22a, 22b) und einer ersten Backe (24a) des zweiten Paars von Backen (24a, 24b) zwischen 75 und 80° liegt und ein Winkelabstand (β) zwischen der ersten Backe (22a) des ersten Paars von Backen (22a, 22b) und einer zweiten Backe (24b) des zweiten Paars von Backen (24a, 24b) zwischen 100 und 105° liegt, wodurch die Winkelabstände in einer Ebene gemessen werden, die rechtwinklig zu der Längsachse der Röhre verläuft, und
Aktivieren des ersten (22a, 22b) und des zweiten (24a, 24b) Paars von Versiegelungsbacken zum quer verlaufenden Versiegeln der Röhre (12).

8. Verfahren nach Anspruch 7, wobei sich die Versiegelungsbacken des ersten (22a, 22b) und des zweiten (24a, 24b) Paars von Versiegelungsbacken auf eine solche Weise relativ zueinander bewegen, dass die Versiegelungsbacken des ersten Paars von Versiegelungsbacken (22a, 22b) beim Versiegeln in einer ersten Versiegelungsebene aufeinandertreffen und die Versiegelungsbacken des zweiten Paars von Versiegelungsbacken (24a, 24b) beim Versiegeln in einer zweiten Versiegelungsebene aufeinandertreffen.

9. Verfahren nach Anspruch 7 oder 8, wobei die Paare von Versiegelungsbacken (22a, 22b, 24a, 24b) das Verpackungsmaterial durch Induktionserwärmen versiegeln.

10. Verfahren nach einem der Ansprüche 7 bis 9, wobei sich die Paare von Versiegelungsbacken (22a, 22b, 24a, 24b) relativ zu jedem Paar von Backen synchron oder asynchron bewegen.

## Revendications

1. Ensemble de mâchoires de scellage pour doter un tube (12) de matériau d'emballage de joints transversaux, ledit ensemble de mâchoires de scellage comprenant
une première paire de mâchoires de scellage opposées (22a, 22b) mobiles l'une par rapport à l'autre pour doter le tube (12) d'un premier joint transversal (6a) et
une deuxième paire de mâchoires de scellage opposées (24a, 24b) mobiles l'une par rapport à l'autre pour doter le tube (12) d'un deuxième joint transversal (6b),
**caractérisé en ce qu'**une distance angulaire (α) entre une première mâchoire (22a) de la première paire de mâchoires (22a, 22b) et une première mâchoire (24a) de la deuxième paire de mâchoires (24a, 24b) est comprise entre 75 et 80°, et une distance angulaire (β) entre la première mâchoire (22a) de la première paire de mâchoires (22a, 22b) et une deuxième mâchoire (24b) de la deuxième paire de mâchoires (24a, 24b) est comprise entre 100 et 105°, les distances angulaires étant ainsi mesurées dans un plan perpendiculaire à l'axe longitudinal du tube.

2. Ensemble de mâchoires de scellage selon la revendication 1, dans lequel les mâchoires de scellage de la première (22a, 22b) et de la deuxième (24a, 24b) paire de mâchoires de scellage sont agencées pour se déplacer les unes par rapport aux autres de telle sorte que les mâchoires de scellage de la première paire de mâchoires de scellage (22a, 22b) se rencontrent dans un premier plan de scellage pendant le scellage, et que les mâchoires de scellage de la deuxième paire de mâchoires de scellage (24a, 24b) se rencontrent dans un deuxième plan de scellage pendant le scellage.

3. Ensemble de mâchoires de scellage selon la revendication 2, dans lequel les plans de scellage dans lesquels les mâchoires de scellage de la première (22a, 22b) et de la deuxième (24a, 24b) paire de mâchoires de scellage se rencontrent pendant le scellage sont inclinés d'un angle d'inclinaison (γ) par rapport à un plan perpendiculaire à un axe longitudinal (Z) du tube (12).

4. Ensemble de mâchoires de scellage selon la revendication 3, dans lequel l'angle d'inclinaison (γ) est compris entre 15 et 30°

5. Ensemble de mâchoires de scellage selon l'une quelconque des revendications précédentes, dans lequel lesdites paires de mâchoires de scellage (22a, 22b, 24a, 24b) sont conçues pour produire un chauffage par induction du matériau d'emballage.

6. Ensemble de mâchoires de scellage selon l'une quelconque des revendications précédentes, dans lequel lesdites paires de mâchoires de scellage (22a, 22b, 24a, 24b) sont conçues pour fonctionner de manière synchrone ou asynchrone par rapport à chaque paire de mâchoires.

7. Procédé permettant de doter un tube (12) de matériau d'emballage de joints transversaux (6a, 6b), comprenant
la fourniture d'une première paire de mâchoires de scellage opposées (22a, 22b) mobiles l'une par rapport à l'autre et
la fourniture d'une deuxième paire de mâchoires de scellage opposées (24a, 24b) mobiles l'une par rapport à l'autre,
**caractérisé en ce qu'**une distance angulaire (α) entre une première mâchoire (22a) de la première paire de mâchoires (22a, 22b) et une première mâchoire (24a) de la deuxième paire de mâchoires (24a, 24b) est comprise entre 75 et 80°, et une distance angulaire (β) entre la première mâchoire (22a) de la première paire de mâchoires (22a, 22b) et une deuxième mâchoire (24b) de la deuxième paire de mâchoires (24a, 24b) est comprise entre 100 et 105°, les distances angulaires étant ainsi mesurées dans un plan perpendiculaire à l'axe longitudinal du tube, et
l'activation desdites première (22a, 22b) et deuxième (24a, 24b) paires de mâchoires de scellage pour sceller transversalement le tube (12).

8. Procédé selon la revendication 7, dans lequel les mâchoires de scellage de la première (22a, 22b) et de la deuxième (24a, 24b) paire de mâchoires de scellage sont agencées pour se déplacer les unes par rapport aux autres de telle sorte que les mâchoires de scellage de la première paire de mâchoires de scellage (22a, 22b) se rencontrent dans un premier plan de scellage pendant le scellage, et que les mâchoires de scellage de la deuxième paire de mâchoires de scellage (24a, 24b) se rencontrent dans un deuxième plan de scellage pendant le scellage.

9. Procédé selon la revendication 7 ou 8, dans lequel lesdites paires de mâchoires de scellage (22a, 22b, 24a, 24b) scellent le matériau d'emballage par chauffage par induction.

10. Procédé selon l'une quelconque des revendications 7 à 9, dans lequel lesdites paires de mâchoires de scellage (22a, 22b, 24a, 24b) se déplacent de manière synchrone ou asynchrone par rapport à chaque paire de mâchoires.
